# EUROPÄISCHE PATENTSCHRIFT

(11) **EP 2 203 366 B1**
(45) Veröffentlichungstag und Bekanntmachung des Hinweises auf die Patenterteilung: **27.06.2012**
(21) Anmeldenummer: 08843892.4
(22) Anmeldetag: 27.10.2008
(51) Int. Cl.: B65G 47/91

(54) **VERFAHREN UND VORRICHTUNG ZUM ERFASSEN UND UMLADEN VON GEPÄCKSTÜCKEN**
METHOD AND APPARATUS FOR GRIPPING AND TRANSFERRING PIECES OF LUGGAGE
PROCÉDÉ ET DISPOSITIF POUR ASSURER LA PRÉHENSION ET LE TRANSBORDEMENT DE BAGAGES

(30) Priorität: 31.10.2007 DE 102007052012
(43) Veröffentlichungstag der Anmeldung: 07.07.2010
(73) Patentinhaber: Grenzebach Maschinenbau GmbH, 86663 Asbach-Bäumenheim (DE)
(72) Erfinder: BECKER, Felix, 81477 München (DE); ROSENMEYER, Peter, 80796 München (DE)
(74) Vertreter: Karl, Frank
(86) Internationale Anmeldenummer: PCT/DE2008/001744
(87) Internationale Veröffentlichungsnummer: WO 2009/056105

(56) Entgegenhaltungen:
- EP-A- 0 841 297
- DE-A1- 19 959 285

## Beschreibung

Das Hauptanwendungsgebiet der vorliegenden Erfindung ist der Umschlag von Gepäckstücken im Personenverkehr. Auf eine besonders schnelle und sorgfältige Behandlung der einzelnen Gepäckstücke kommt es dabei im nationalen und internationalen Flugverkehr an.

Zur Bewältigung des durch den ständig zunehmenden Flugverkehr ansteigenden Gepäckaufkommens sind die Flughafenbetreiber bemüht, alle Möglichkeiten zur Rationalisierung und Optimierung der Logistik des Fluggepäcks zu erkunden und in der Folge auch einzusetzen. Zu diesem Zweck sind sie bestrebt den Durchsatz der bestehenden Gepäckverteilbereiche sowie die Produktivität der dort beschäftigten Mitarbeiter zu erhöhen. In den Gepäckverteilbereichen der Flughäfen sind dabei die grundlegenden Tätigkeiten des Transportierens, des Identifizierens und des Sortierens von Gepäckstücken bereits heute weitestgehend automatisiert.

Im Gegensatz hierzu erfolgen das Beladen und das Entladen der Ladehilfsmittel, wie der Container oder der Transportwagen, mit Gepäckstücken in der Praxis zurzeit noch vollständig auf manueller Basis. Der Grund dafür liegt vor allem im breiten Spektrum der zu transportierenden Gepäckstücke, die sich in der Regel aus dem so genannten Normalgepäck und dem Sondergepäck (Sperrgepäck) zusammensetzen.

Im Folgenden wird beispielhaft der Bereich des Normalgepäcks auf Flughäfen betrachtet. Darunter versteht man zum Beispiel Behältnisse wie Koffer, Taschen, Rücksäcke, Kartons und so weiter. Das Behältnis selbst kann aus Metall, Leder, Gewebe jeglicher Art, Kunststoff, Holz Karton oder ähnlichen Materialien bestehen. Das Normalgepäck hat in der Regel ein Gewicht zwischen 2 kg und 50 kg bei einem Durchschnittsgewicht von ca. 18 kg.

Die Abmessungen des Normalgepäcks betragen in der Länge 20 cm bis 100 cm, in der Höhe 10 cm bis 50 cm und in der Breite 10 cm bis 7o cm.

Die unterschiedlichen Materialien sowie die unterschiedliche Steifigkeit der einzelnen Gepäckstücke haben bisher ein zuverlässiges automatisches Beladen und Entladen verhindert. Die manuelle Beladung und Entladung der Gepäckstücke bilden jedoch einen Engpass beim Durchsatz der Gepäckverteilung auf Flughäfen. Sie erhöht zudem die Kosten und belastet die Gesundheit der dort beschäftigten Mitarbeiter. Ein Lösungsansatz für das Handhaben von Gepäckstücken in der Gepäckabwicklung auf Flughäfen ist aus der DE 100 15 778 A1 bekannt geworden.

Hier wird zum Entladen oder Umladen der Gepäckstücke, welche in Containern, so genannte ULD (= unitized load device) angeordnet sind, wobei die Container mittels, als Dolly bezeichneten, Anhängern transportiert werden und zu einer Gepäckförderanlage gebracht werden, wo der Dolly mit dem mit Gepäck und / oder Frachtgut beladenen Container jeweils seitlich im Abstand neben einem zur Gepäckförderanlage gehörigen Förderband angeordnet wird. Von diesem werden die Gepäckstücke zum Beispiel zu einem Förderband weiterbefördert werden, eine spezielle Behandlung eines Dolly vorgeschlagen.

Im Anspruch 1 dieser Druckschrift wird beansprucht, dass der Dolly unmittelbar an eine Entladevorrichtung herangefahren wird, dass der Dolly mit einer Ladestation fluchtet und dass der Container nach Erreichen der Ladestation auf diese und daran gesichert wird, und dass der Container in Förderrichtung gekippt wird , so dass die darin befindlichen Gepäckstücke schwerkraftabhängig in Kipprichtung auf ein zur Gepäckförderanlage gehöriges angrenzendes Förderband rutschen, über welches sie zur Gepäckausgabe gefördert werden.

Bei einem solchen Vorgang des mehr oder weniger kontrollierten Abkippens der Gepäckstücke werden zwar Arbeitskräfte zum Herübergeben bzw. Herabheben der Gepäckstücke nicht benötigt, jedoch sind andere Arbeitskräfte notwendig den Dolly exakt an die jeweilige Stelle des Förderbands zu fahren, sowie darauf zu achten, dass keine Gepäckstücke über das Förderband hinaus fallen.

Zudem wird Personal benötigt um die Anhänger jeweils nach Erreichen der Ladestation von dem gesamten Zug der Anhänger abzukoppeln bevor der Kippvorgang eingeleitet wird.

Eine weitere Vorrichtung zur Handhabung von Gegenständen, insbesondere von Gepäckstücken, mit einem Tragarm der in wenigstens zwei Achsen frei beweglich ist und an einer Zentraleinheit angelenkt ist, welche am Ende einer Förderstrecke für Gegenstände, insbesondere eines Förderbandes, positioniert ist, wobei die Bewegung des Tragarms vorgebbar gesteuert ist, ist aus der DE 100 35 810 A1 bekannt.

Nach dem Kennzeichen des Anspruchs 1 dieser Druckschrift soll hierbei unter Schutz gestellt werden, dass am freien Ende des Tragarms eine Ladevorrichtung angeordnet ist, welche eine Tragplattform zur Aufnahme von Gegenständen, insbesondere von Gepäckstücken , und je eine rückwärtige und eine seitliche Begrenzung aufweist, an welcher sich der jeweils aufgenommene Gegenstand anlegt, und dass eine Entladevorrichtung vorhanden ist, welche den aufgenommenen Gegenstand von der Tragplattform entfernt.

Die Tragplattform ist hierbei nach den weiteren Angaben in dieser Druckschrift so ausgebildet, dass wahlweise an der linken oder der rechten Seite eine klappbare und in der Tragplattform versenkte, Begrenzung vorgesehen ist, wobei die Bewegung der Entladevorrichtung mit der Bewegung des Tragarms und somit der Tragplattform koordiniert ist

Auf welche Weise jedoch die jeweiligen Gepäckstücke auf die Tragplattform gelangen, ist der DE 100 35 810 A1 nicht zu entnehmen.

Aus der EP 0841 297 A1, die die Oberbegriffe von Ansprüchen 1 und 9 offenbart, ist ferner eine Vorrichtung zum Ergreifen von Gepäck bekannt, bei der entweder mit einer, über ein Vakuum betätigten, Greifvorrichtung oder mittels eines mechanischen Greifmechanismus Gepäckstücke angehoben und weiter befördert werden können. Die Greifvorrichtung bzw. der Greifmechanismus wird hierbei von Hand betätigt. Eine automatische Erfassung der Gepäckstücke ist nicht vorgesehen.

Aus der DE 10 2005 022 828 A1 ist weiterhin ein Verfahren zum Beladen eines Behälters für Stückgut mit, von einem Förderer angeliefertem, Stückgut mittels eines automatisierten Handhabungsgeräts bekannt, das an einem Arm einseitig eine mit einer Stützeinrichtung für das Stückgut versehene Transporteinrichtung aufweist, Bei diesem Verfahren wird gemäß dem Anspruch 1 das Stückgut jeweils von einem Förderer auf die Stützeinrichtung bewegt, die dabei geöffnet wird. Sodann wird das Stückgut auf der Stützeinrichtung aufliegend in einen Container an einen ermittelbaren Bestimmungsort überführt und dort wird das Stückgut selbsttätig eingesetzt, wobei die Stützeinrichtung, wenigstens größtenteils, von der vor dem Bestimmungsort verharrenden Transporteinrichtung unter dem Stückgut weggezogen wird.

Hierbei wird das Handhabungsgerät als ein mehrachsiger Roboter verwendet und die Transportvorrichtung als Hand des Roboters ausgebildet (Anspruch 2).

Außerdem wird der Förderer als ein Förderband ausgebildet, von dem mittels eines Schub - oder Ziehgeräts ein Stückgut auf die Stützeinrichtung geschoben wird (Anspruch 3). Bei diesem bekannten Verfahren werden zudem Näherungssensoren und eine Kamera zur Überwachung des Arbeitsablaufs verwendet. Die Stützeinrichtung ist hierbei als teleskopartig aus - und einfahrbare rechteckige Plattform ausgebildet.

Mit diesem Verfahren lassen sich jedoch lediglich Behälter mit Stückgut beladen. Auf welche Weise ein mit Stückgut verschiedenartigster Ausstattung schon beladener Container mit seitlicher Öffnung automatisch entladen werden kann, ist der DE 10 2005 022 828 A1 nicht zu entnehmen.

Aus der DE 199 34 095 A1 ist ein Verfahren zur automatisierten Beförderung, Sortierung und Verladung von Gepäckstücken in Flughafenanlagen, die eine Gepäckförderanlage aufweisen bekannt, welche das Gepäck von einem Check-In-Bereich zu einer Gepäckhalle befördert, von wo es zur Verladung in Flugzeuge gelangt.

Dieses Verfahren zeichnet sich dadurch aus, dass im Wesentlichen in einem ersten Schritt die relevanten Daten jedes Gepäckstücks erfasst, in einem zweiten Schritt diese Daten in ein Rechnersystem eingegeben werden , in einem dritten Schritt entsprechend dem jeweiligen Flugziel zur Verladestation gebracht und in einem vierten Schritt automatisch mit Hilfe von Robotern und Greifwerkzeugen und/oder mechanischen Verladevorrichtungen in Verlademittel verladen werden.

Wie die entsprechenden automatisierten Verladewerkzeuge (Anspruch 12) ausgestaltet sind, ist der DE 199 34 095 A1 jedoch nicht zu entnehmen.

Aus der DE 199 59 285 A1 ist zudem ein Vakuum -Greifsystem zum Greifen eines Objekts und ein Handhabungsgerät zum Handhaben eines Objekts mit Hilfe eines Vakuum - Greifsystems bekannt. Hierbei wird von einem Stand der Technik ausgegangen, bei dem das Vakuum - Greifsystem (10) einen Grundkörper (18) und mindestens zwei in einem rechten Winkel zueinander angeordnete und an dem Grundkörper (18) angeordnete Saugeinheiten (19, 20) mit jeweils mindestens einem Sauggreifer (21,22) aufweist, wobei mindestens eine der Saugeinheiten (19 ) das oder jedes zu greifende Objekt (11a) von oben und mindestens eines der Saugeinheiten (20) das oder jedes zu greifende Objekt (11a) von einer Seite greift. Bei diesem Vakuum - Greifsystem soll die Aufgabe gelöst werden, dieses auszugestalten und so weiterzubilden, dass mit ihm problemlos Objekte mit unterschiedlichen Abmessungen gegriffen werden können und, dass das Vakuum - Greifsystem gleichzeitig das gegriffene Objekt sicher und zuverlässig halten kann. Gelöst wird diese Aufgabe dadurch, dass die Saugeinheiten (19,20) derart an dem Grundkörper (18) angeordnet sind, dass zum Greifen des mindestens einen Objekts (11a) der Abstand zwischen der oder jeder Saugeinheit (19) auf der Oberseite des oder jeden Objekts (11a) und der oder jeder Saugeinheit (20) auf der Seite des oder jeden Objekts (11a) variierbar ist.

Wie den Figuren und dem Textteil der DE 199 59 285 A1 zu entnehmen ist, handelt es sich bei zu handhabenden Objekten im Wesentlichen um kubische Körper die auf Paletten lagern. Um in der Hauptsache solche Objekte zu handhaben wird zudem auch von einem Stand der Technik ausgegangen, bei dem zwei Saugeinheiten im Wesentlichen fest in einem rechten Winkel angeordnet sind, was die Handhabung kubischer Körper erheblich erleichtert, da auch diese nur rechte Winkel aufweisen. Abgesehen davon wird ein wesentlicher Teil dieser Druckschrift von der Ausgestaltung eines Untergreifers (25) bestimmt, der sich bevorzugt bei der Handhabung glatter kubischer Körper anwenden lässt, bei der Handhabung von unterschiedlichsten Gepäckstücken jedoch nicht zu gebrauchen ist und eher hinderlich wirkt. Zur Handhabung unterschiedlich gestalteter Gepäckstücke, bei denen es sich meist nicht um glatte kubische Körper sondern um raue, unebene und aus verschiedensten Materialien bestehende Behältnisse handelt, eignet sich dieses bekannte Vakuum - Greifsystem offensichtlich nicht.

Weiterhin ist aus der DE 10 2004 042 7825 B3 ein Verfahren zum Betreiben einer Unterdruckhandhabungseinrichtung in Verbindung mit einer, an eine Maschinensteuerung anschließbaren, programmierbaren Steuerung bekannt, bei der Im Wesentlichen in einem ersten Schaltzustand der programmierbaren Steuerung ( 38) das Steuerventil (44) im Greifermodul (20) geschlossen und mittels eines Drucksensors (78) im Unterdruckerzeuger (28) der Unterdruck in der zum Steuerventil (44) führenden Unterdruckleitung (30) erfasst wird.

Mit diesem Verfahren soll im Wesentlichen die Aufgabe gelöst werden eine Unterdruckhandhabungsvorrichtung vorzuschlagen, mit der auf einfache, sichere und schnelle Art und Weise Gegenstände ergriffen und angehoben werden können, wobei nicht unnötig Unterdruck verbraucht werden soll und frühzeitig ein Ausfall eines Bauteils ermittelbar ist.

Eine Anregung zum Entnehmen unterschiedlicher Gepäckstücke aus einem Behälter ist dieser Druckschrift nicht zu entnehmen.

Der vorliegenden Erfindung liegt deshalb, ausgehend von dem aufgezeigten Stand der Technik die Aufgabe zugrunde, ein Verfahren und eine Vorrichtung anzugeben die es ermöglichen mit möglichst wenig Personal unterschiedliche Gepäckstücke aus einem Behälter automatisch zu entnehmen und auf ein Förderband zu legen, sowie auch den umgekehrten Vorgang, nämlich die Beladung eines Containers mit Gepäckstücken unterschiedlicher Abmessungen, automatisch zu bewerkstelligen.

Diese Aufgabe wird gelöst durch die Vorrichtung des Anspruchs 1, bzw. dem Verfahren nach Anspruch 9 sowie das Computerprogramm des Anspruchs 16 und den maschinenlesbaren Träger des Anspruchs 17.

Der Kerngedanke der vorliegenden Erfindung liegt darin, die zum Einsatz kommenden technischen Mittel durch spezielle Formen und Ausgestaltungen von Greifern und den zugehörigen Steuerungen in die Lage zu versetzen unterschiedlichste Gepäckstücke hinsichtlich ihrer Oberflächenbeschaffenheit und ihrer speziellen Abmessungen zu erfassen und die jeweils anzuwendende Kraft zur Beförderung zu ermitteln und einzusetzen.

Als bestes Vorbild und als Modell für solche technischen Mittel ist offensichtlich die menschliche Hand geeignet.

Versetzt man sich in die Lage eines blinden Menschen, der die betreffenden Gepäckstücke aus einem Container holen müsste, so würde dieser wohl zuerst mit Hilfe seiner Hände ertasten welche Abmessungen die jeweiligen Gepäckstücke haben und wie die Oberfläche beschaffen ist, um abzuschätzen ob die Hände beim Ergreifen abrutschen oder ob sie mit vertretbarem Aufwand in der Lage sind die jeweilige Last zu bewegen.

Um dieses Modell der zu lösenden Aufgabe, nämlich ein in seinem Gewicht und seiner Erfassbarkeit unbekanntes Gepäckstück praktisch richtig einzuschätzen, technisch zu realisieren und dann dieses Gepäckstück im gewünschten Sinn zu bewegen, wird auf das, auch aus der Natur bekannte, Prinzip der Saugnäpfe zurückgegriffen.

Als Grundelement ist ein mit Unterdruck betätigter Saugnapf in der Lage, im Wesentlichen jeweils in Abhängigkeit von der Oberflächenbeschaffenheit des Gepäckstückes, der Größe des Unterdrucks und der Beschaffenheit der Dichtlippe eine bestimmte Last in vertikaler Richtung gegen die Schwerkraft anzuheben oder eine bestimmte Last in horizontaler Richtung gegen die Reibungskraft zu ziehen.

Darüber hinaus ermöglicht ein solches Saugelement, als mechanischer Ersatz für die Druckkraft von Fingern einer Hand, durch zusätzliche technische Sensoren und Steuerungselemente, Daten über die Oberflächenbeschaffenheit und die Massenträgheit des berührten Körpers zu ermitteln.

So können bei einem derartigen Saugelement über steuerbare, unterschiedlich dimensionierte und verschließbare Beiluft -Kanäle Aussagen über die Rauhigkeit der betasteten Oberfläche gemacht werden.

Ein anderer Weg ist die Erfassung des Luftdruckes und der beförderten Luftmenge über entsprechende Messgeräte.

Solche Messwerte an Hand von bekannten Oberflächen in Vorversuchen ermittelt, können dann in der Praxis als Entscheidungshilfe dienen für den Vorgang des Erkennens der Art des vorliegenden Gepäckstückes.

Nach der Ermittlung der Oberflächenbeschaffenheit eines bestimmten Gepäckstückes kann diese Erkenntnis ferner eine Entscheidungshilfe darüber geben, ob es im vorliegenden Fall sinnvoll ist, den Saugdruck zu erhöhen um das Gepäckstück anzuziehen oder anzuheben, oder ob die Oberfläche so rau ist, dass eine Kraft einleitende Anhaftung an dieser Stelle nicht möglich ist. In diesem Fall ist es wahrscheinlich sinnvoller den Saugdruck an einer anderen Stelle zu erhöhen, die eine besser geeignete Stelle signalisiert.

Bei all diesen beschriebenen Funktionen ist noch nicht berücksichtigt, dass der Anpressdruck des betreffenden Saugnapfes als Parameter mit erfasst werden muss. Denn es ist einzusehen, dass ein gewisses Maß an Rauhigkeit durch einen erhöhten Anpressdruck überwunden werden kann und dann doch noch zu einer befriedigenden Kraft einleitenden Anhaftung führen kann.

Um für die beschriebenen Vorgänge datentechnisch verwertbare Messwerte zu erhalten sind, wie schon oben bemerkt, Vorversuche mit den häufigsten Oberflächenmaterialien sinnvoll.

Zur Erfassung des jeweiligen Anpressdrucks eines bestimmten Saugelements sind an jedem Element entsprechende Drucksensoren vorgesehen.

Im Folgenden wird die Erfindung näher beschrieben.

Es zeigen im Einzelnen:
Figur 1: die Greifervorrichtung in Arbeitsposition
Figur 2: einen charakteristischen Arbeitsschritt
Figur 3: einen weiteren Arbeitsschritt
Figur 4: ein voll erfasstes Gepäckstück
Figur 5: eine Detailansicht erfindungsgemäßer Saugelemente

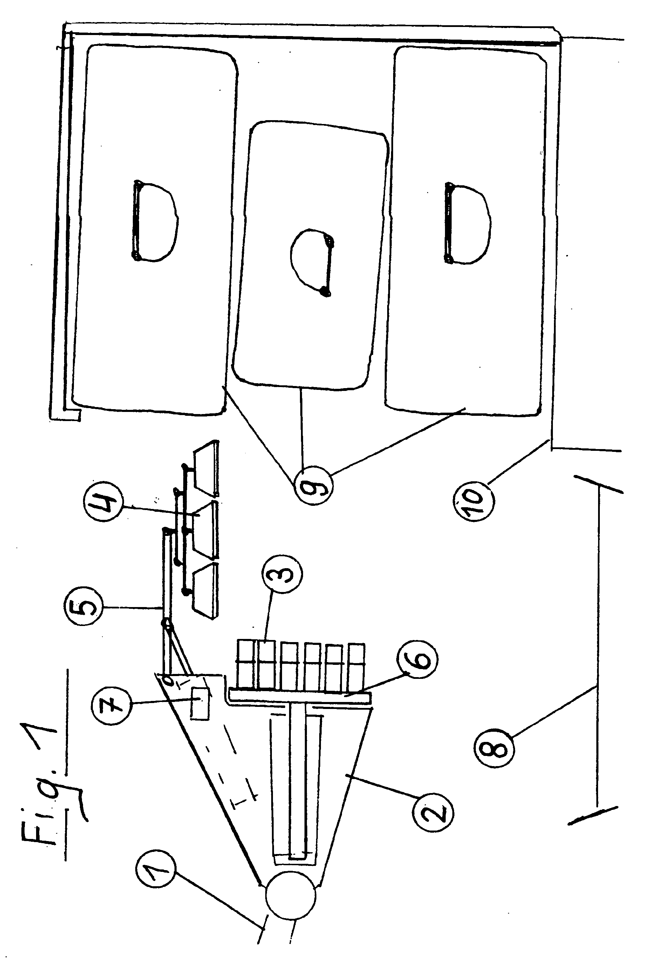

In der Fig. 1 ist eine Darstellung der erfindungsgemäßen Vorrichtung zum Erfassen und Umladen von Gepäckstücken am Beispiel des Entladens eines mit drei Koffern beladenen Containers gezeigt.

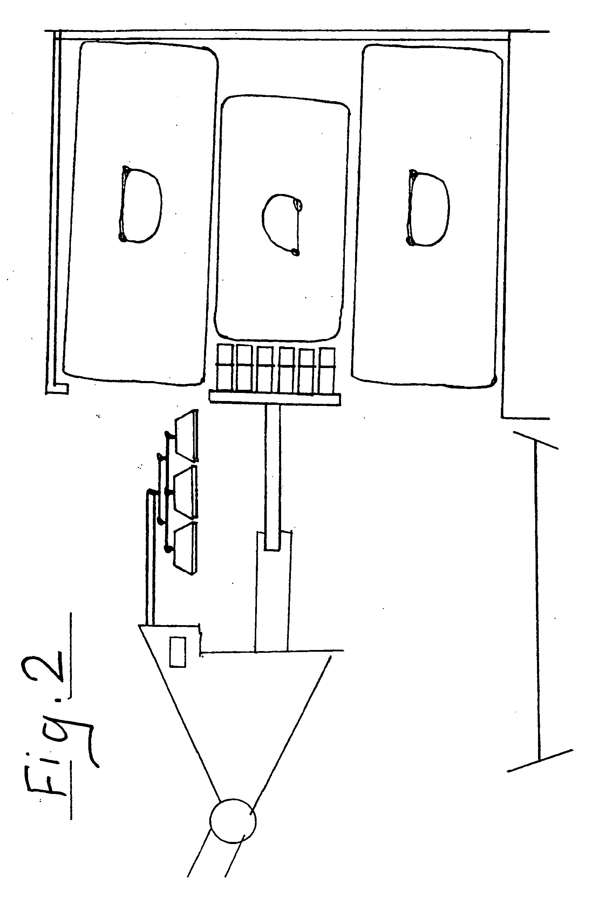

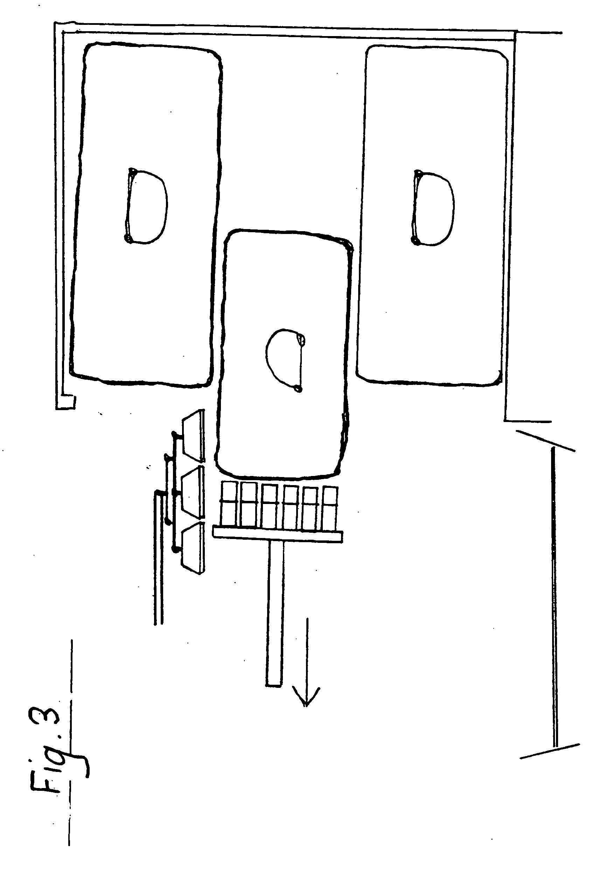

Das Greifergehäuse (2) ist an einem mehrachsigen Roboterarm (1) befestigt, der bekanntermaßen in der Lage ist, das Greifergehäuse in jede gewünschte denkbare Position zu bringen. Der Zweite Saugelementträger (6), der die im Wesentlichen horizontal wirkenden Horizontalsaugelemente (3) trägt und durch seine Eigenbewegung, in Verbindung mit der von dem Roboterarm (1) bewerkstelligten Anfahrposition, zum Einsatz bringt, tritt im gezeigten Fall zuerst in Aktion. Denn es ist ersichtlich, dass, wie in der Fig.2 und später in der Fig. 3 gezeigt ist, das erste Gepäckstück (9) bei dem gezeigten Container (10) nur horizontal herausbefördert werden kann. Dies ist auch nur bei dem gezeigten mittleren Gepäckstück (9) möglich, da sinnvollerweise damit gerechnet werden muss, dass, wie in den Figuren 2 bis 4 gezeichnet, das oberste Gepäckstück sich an einer Kante des Oberteils des jeweiligen Behälters verhaken kann. Bei weiter unten liegenden Gepäckstücken wäre der Versuch einer Entladung wenig sinnvoll. da ein solches durch das Gewicht der darüber liegenden Gepäckstücke zusätzlich belastet wird. Das Förderband (8), das beispielhaft für den möglichen Weitertransport angedeutet wurde, muss sich natürlich nicht in unmittelbarer Nähe des Behälters, bzw. Containers (10) der Gepäckstücke (9) befinden, da die Reichweite des Roboterarms (1) auch eine Umladung in entferntere Bereiche zulassen würde.

Die am ersten Saugelementträger (5) angeordneten Vertikalsaugelemente (4) weisen, wie auch aus der Fig. 1 deutlich wird, eine andere Form auf als die Horizontalsaugelemente (3). Dies betrifft im Wesentlichen die Größe der Saugfläche. Der erste vertikale Saugelementträger (5) lässt sich, zusätzlich zu den vom Greifergehäuse (2) ausführbaren Bewegungen, nicht nur über die angelenkte, nicht näher bezeichnete, Schubstange in der vertikalen Richtung bewegen sondern auch in einem relativ weiten Bereich in horizontaler Richtung.

Dies ist zum Beispiel für den Fall notwendig, dass der Saugelementträger Zweite (6) ein Gepäckstück erfasst und ein Stück herausgezogen hat, jedoch die Vertikalsaugelemente (4) noch nicht ausreichenden Halt an der Oberfläche eines Gepäckstücks (9) gefunden haben. In diesem Fall wird die Notwendigkeit eines Umsetzens des ersten Saugelementträgers (5) von der elektronischen Steuerung erkannt, die entsprechend in Aktion befindlichen Vertikalsaugelemente (4) werden gelöst, der erste Saugelementträger (5) seitlich und / oder nach vorwärts oder rückwärts versetzt, und die Vertikalsaugelemente (4) treten erneut in Aktion. In schwierigen Fällen muss dieser Vorgang wiederholt werden.

Derselbe Vorgang ist prinzipiell auch bei den Horizontalsaugelementen (3) möglich. Der Zweite Saugelementträger (6) ist zu diesem Zweck horizontal verschiebbar und / oder drehbar.

Aufgrund der aufgezeigten Vorgänge ist ersichtlich, dass der Zweite Saugelementträger (6) und der erste Saugelementträger (5) weitgehend unabhängig voneinander operieren können.

Für die Bewegungssteuerung des Greifergehäuses (2) ist der Sensor (7) maßgebend. Der Sensor (7) steht hierbei stellvertretend für eine Gruppe von Sensoren die in allen bekannten Formen von Abstandssensoren ausgeführt sein können. Vom Ultraschallsensor, über Lichtsensoren sind jeweils nach den spezifischen Einsatzanforderungen auch Mikrowellensensoren denkbar. Auch aus Gründen der Kollisionssicherheit kann der gesamte nähere Umgebungsbereich des Greifergehäuses (2) durch die Sensorgruppe (7) überwacht werden.

In der Fig. 2 ist gezeigt, wie Horizontalsaugelemente (3) ein Gepäckstück erfasst haben und der Halt der Horizontalsaugelemente (3) ausreicht, ein erstes Gepäckstück (9) aus dem Behälter (10) zu ziehen.

In der Darstellung der Fig.3 ist dieser Vorgang schon fortgeschritten, der erste Saugelementträger (5) kann einen Teil der Vertikalsaugelemente (4) ansetzen und den Vorgang des Herausziehens eines Gepäckstückes (9) in der Weise unterstützen, dass dieses einerseits leicht angehoben wird und andererseits der erste Saugelementträger (5), der im Wesentlichen für vertikale Traglasten angelegt ist, durch eine zusätzliche Bewegung des Greiferkopfes (2) das Herausziehen des Gepäckstückes (9) unterstützt. Eine andere Möglichkeit besteht darin, für derartige Fälle den Zweiten Saugelementträger (6) mit der Fähigkeit einer horizontalen Bewegbarkeit, unabhängig von den Bewegungen des Greifergehäuses (2) auszustatten. Mit dem Fortschritt des Herausziehens eines Gepäckstückes (9) werden die Vertikalsaugelemente (4) des ersten vertikalen Saugelementträgers (5) gelöst und deren Träger (5) erneut angesetzt.

Dieser Vorgang kann jedoch nur solange fortgesetzt werden, bis entweder alle Vertikalsaugelemente (4) auf einem Gepäckstück (9) Halt gefunden haben oder das betreffende Gepäckstück (9) zu kippen droht. Um diesen Zeitpunkt, der sich lange vorher ankündigt, rechtzeitig zu erfassen sind im Greifergehäuse und / oder dem ersten Saugelementträger (5), bzw. dem Zweiten Saugelementträger (6) nicht näher bezeichnete, und aus Gründen der Übersicht nicht näher dargestellte, Sensoren vorgesehen, die die Funktion einer Waage ausüben. Da der beschrieben Auszugsvorgang in genau dosierten Schritten vollzogen wird, ist somit dieser Zeitpunkt steuerungstechnisch leicht zu erfassen.

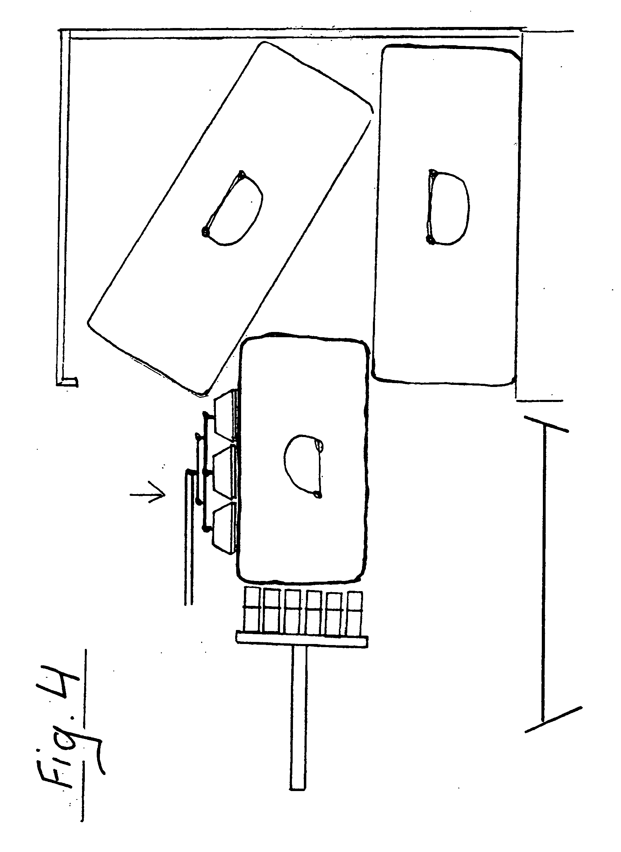

In der Fig. 4 ist dargestellt, wie ein Gepäckstück (9) von beiden Saugelementträgem voll erfasst ist und das Herunterfallen des nächsten Gepäckstückes (9) kurz bevorsteht. Die ohne Schwierigkeiten erfolgende Weiterbeförderung des erfassten Gepäckstückes (9) an den jeweiligen gewünschten Bestimmungsort ist hier nicht weiter betrachtet.

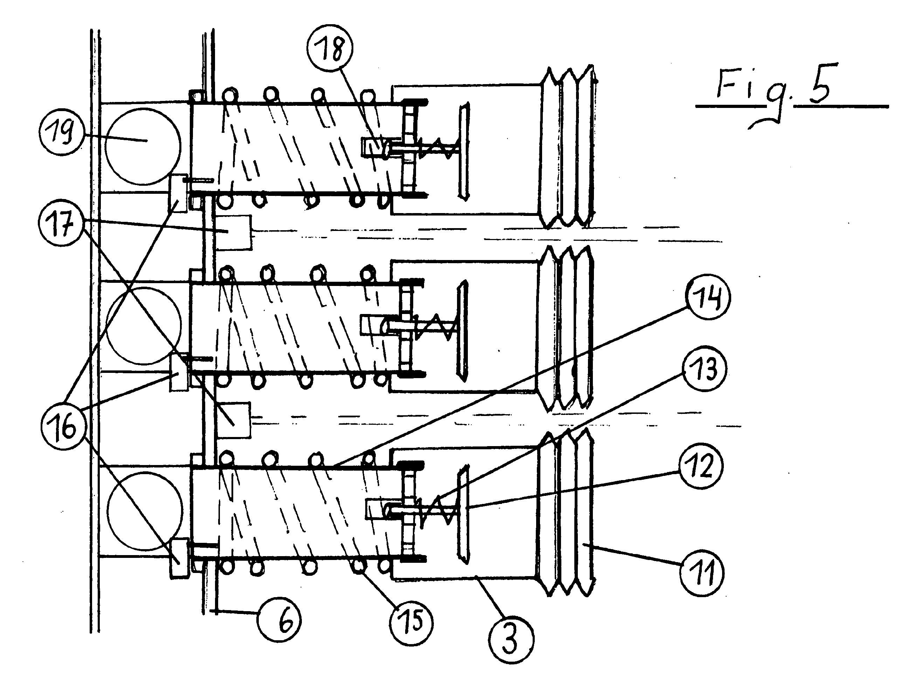

In der Fig. 5 sind beispielhaft drei einzelne, im Verbund wirkende, Horizontalsaugelemente (3) dargestellt.

Die Dichtlippe (11) besteht hierbei aus einem leicht komprimierbaren Material wie zum Beispiel Gummi oder einem geeigneten Kunststoff. Die Kraft, mit der die Dichtlippe das jeweilige Gepäckstück berührt, wird unmittelbar durch die Teleskopfeder (15), die um den Schaft (14) eines Saugelements gelegt ist, aufgebracht. Mittelbar wird diese Kraft im vorliegenden Fall von dem Zweiten Saugelementträger (6), bzw. dem Greifergehäuse (2),verursacht.

Das Sperrventil (12) wirkt mit der Ventilfeder (13) zusammen, deren Vorspannung sich über das einstellbare Stellelement (18) einstellen lässt. Im Prinzip ist hierfür zum Beispiel ein elektrisch betätigter Spindelantrieb denkbar, dessen jeweilige Position über einen Sensor ermittelt wird.

Um in besonderen Fällen zusätzlich den Druck der Teleskopfeder (15) einstellbar und überprüfbar zu gestalten ist hierfür eine Vorrichtung vorgesehen, die der bei der Einstellung der Vorspannung der Ventilfeder (13) entspricht.

Zur Erfassung des in dem jeweiligen Absaugkanal (19) fließenden Luftstroms ist ein entsprechender Durchflussmesser (16) vorgesehen, dessen Messdaten kontinuierlich abgefragt werden können.

Durch das erfindungsgemäße Verfahren wird gewährleistet, dass nicht nur relativ ebene und glatte Flächen von den Saugelementen erfasst werden können, sondern auch zum Beispiel Rücksäcke mit unebenen und schrägen Flächenteilen erfasst werden. Dies wird in einer besonderen Ausgestaltung der Erfindung durch Kippelemente erreicht, die sich entweder am Fußpunkt der jeweiligen Saugelementträger und / oder am Fußpunkt einzelner Saugelemente (3,4) befinden.

Die Überwachung der erfindungsgemäßen Vorrichtung kann zusätzlich über ein Kamerasystem erfolgen.

Handelt es sich bei dem Vorgang des Erfassens und Umladens um Behälter die oben offen sind, ist das Erfassen der Gepäckstücke leichter, da lediglich Gepäckstücke von obern von den Saugelementen erfasst werden müssen.

Bei der Beurteilung der Lage zu Beginn eines Erfassungsvorganges wird über eine Art "Geländemodell mit Erfassung der Höhenlagen" und entsprechende Sensoren ermittelt wie tief die Vorderflächen der einzelnen Gepäckstücke im Behälter gelagert sind, um zu entscheiden welches Gepäckstück als erstes zu erfassen ist.

Diese Entscheidung wird aufgrund dieser Daten, der zugleich ermittelten Beschaffenheit der jeweiligen Oberfläche des betreffenden Gepäckstückes und des aus der Größe der betreffenden Oberfläche geschätzten Gewichts getroffen.

Die Steuerung der geschilderten komplexen Bewegungsabläufe und Zugriffe auf Datenspeicher, die sich mit der Zunahme an Erfahrungswerten stetig vergrößern, erfordert ein besonderes Steuerprogramm.

### Bezugszeichenliste

- (1): Roboterarm
- (2): Greifergehäuse
- (3): Horizontalsaugelement
- (4): Vertikalsaugelement
- (5): Erste Saugelementträger (vertikal)
- (6): Zweite Saugelementträger (horizontal)
- (7): Sensor
- (8): Förderband
- (9): Gepäckstück
- (10): Container, Behälter
- (11): Dichtlippe
- (12): Sperrventil
- (13): Ventilfeder
- (14): Saugelement - Schaft
- (15): Teleskopfeder
- (16): Durchflussmesser (Messung des Luftstroms)
- (17): Abstandsmesser (z.B. auf Ultraschallbasis)
- (18): Stellelement (Federvorspannung)
- (19): Absaugkanal

## Patentansprüche

1. Vorrichtung zum automatischen Entnehmen von, hinsichtlich ihrer Oberflächenbeschaffenheit und ihren speziellen Abmessungen, unterschiedlichen Gepäckstücken und zum Bereitstellen für den Weitertransport mit einem an einem Roboterarm angelenkten Greifer mit Saugelementen, und mit einem ersten Saugelementträger (5) mit mindestens einem Vertikalsaugelement (4), wobei dieser Saugelementträger (5) eine zusätzliche Schubstange in der vertikalen Richtung aufweist,
**gekennzeichnet durch**
die folgenden Merkmale
a) der Greifer weist einen Zweiten Saugelementträger (6) mit mindestens einem Horizontalsaugelement (3) auf,
b) die Saugelemente (3, 4) sind einzeln ansteuerbar und geben über den jeweiligen Saugvorgang aktiv Informationen an ein Steuerungszentrum,
c) sowohl der Zweite Saugelementträger (6) als auch der eerste Saugelementträger (5) weisen in benachbarten Bereichen unterschiedlich ausgestaltete Saugelemente auf,
d) mindestens ein Saugelement (3, 4) weist mindestens ein ansteuerbares Stellelement (18) zur Einstellung einer Federvorspannung auf, wobei diese Einstellung in Echtzeit erfasst wird,
e) **durch** ein Bilderkennungssystem wird die Verladesituation in 3D und Echtzeit visualisiert.

2. Vorrichtung nach Anspruch 1,
**dadurch gekennzeichnet,**
**dass** der Zweite Saugelementträger (6) und / oder der eerste Saugelementträger (5) jeweils Arrays von Saugelementen tragen.

3. Vorrichtung nach einem der vorhergehenden Ansprüche,
**dadurch gekennzeichnet,**
**dass** mindestens ein Saugelement (3, 4) mindestens einen Durchflussmesser (16) zur Messung des Saugluftstroms und / oder ein Messmittel zur Messung des Drucks der Saugluft aufweist.

4. Vorrichtung nach einem der vorhergehenden Ansprüche,
**dadurch gekennzeichnet,**
**dass** mindestens ein Saugelement (3, 4) mindestens ein ansteuerbares Stellelement (18) zur Einstellung der Federvorspannung aufweist, wobei diese Einstellung in Echtzeit erfasst werden kann.

5. Vorrichtung nach einem der vorhergehenden Ansprüche,
**dadurch gekennzeichnet,**
**dass** mindestens ein Saugelement (3, 4) mindestens einen Absaugkanal (19) aufweist, dessen Querschnitt veränderbar eingestellt werden kann, wobei diese Einstellung in Echtzeit erfasst werden kann.

6. Vorrichtung nach einem der vorhergehenden Ansprüche,
**dadurch gekennzeichnet,**
**dass** mindestens ein Saugelement (3, 4) mindestens einen Abstandsmesser (17) aufweist, wobei das Messergebnis in Echtzeit erfasst werden kann.

7. Vorrichtung nach einem der vorhergehenden Ansprüche,
**dadurch gekennzeichnet,**
**dass** die Vertikalsaugelemente (4) eine andere Form aufweisen als die Horizontalsaugelemente (3).

8. Vorrichtung nach einem der vorhergehenden Ansprüche,
**dadurch gekennzeichnet,**
**dass** sich am Fußpunkt der jeweiligen Saugelementträger und / oder am Fußpunkt einzelner Saugelemente (3, 4) Kippelemente befinden.

9. Verfahren zum automatischen Entnehmen von, hinsichtlich ihrer Oberflächenbeschaffenheit und ihren speziellen Abmessungen, unterschiedlichen Gepäckstücken und zum Bereitstellen für den Weitertransport mittels eines an einem Roboterarm angelenkten Greifers mit Saugelementen, unter Verwendung der Vorrichtung nach Anspruch 1 **dadurch gekennzeichnet daß**,
a) der Greifer und der zu entleerende Behälter werden einander angenähert,
b) das aufgrund bestimmter Kriterien, zum Beispiel bei horizontaler Entladung, ermittelte erste zu entfernende Gepäckstück wird von dem Zweiten Saugelementträger (6) in Verbindung mit den Horizontalsaugelementen (3) erfasst und soweit als möglich herausgezogen,
c) können die Vertikalsaugelemente (4) noch nicht ausreichend Halt finden an dem teilweise zugänglichen Gepäckstück, wird die Notwendigkeit eines Umsetzens des ersten Saugelementträgers (5) von der elektronischen Steuerung erkannt und die Vertikalsaugelemente (4) werden gelöst,
d) der erste Saugelementträger (5) wird seitlich und / oder nach vorwärts oder rückwärts versetzt und die Vertikalsaugelemente (4) treten erneut in Aktion,
e) in schwierigen Fällen wird dieser Vorgang wiederholt.

10. Verfahren nach Anspruch 9,
**dadurch gekennzeichnet,**
**dass** die Saugelemente (3, 4) Mittel zur Messung des Luftdurchsatzes (16) und Übermittlung der Messwerte sowie Mittel zur Einstellung und Rückmeldung der Federvorspannung (18) aufweisen.

11. Verfahren nach einem der Ansprüche 9 oder 10,
**dadurch gekennzeichnet,**
**dass** der Anpressdruck des betreffenden Saugnapfes als Parameter über Vorversuche mit den häufigsten Oberflächenmaterialien erfasst wird.

12. Verfahren nach einem der Ansprüche 9 bis 11,
**dadurch gekennzeichnet,**
**dass** bei der Beurteilung der Lage zu Beginn eines Erfassungsvorgangs über eine Art Geländemodell mit Erfassung der Höhenlagen und entsprechenden Sensoren ermittelt wird, wie tief die Vorderflächen der einzelnen Gepäckstücke im Behälter gelagert sind.

13. Verfahren nach einem der Ansprüche 9 bis 12,
**dadurch gekennzeichnet,**
**dass** es zum Entladen und / oder Beladen stationärer oder fahrbarer Behälter, oder in Fahrt befindlicher Behälter, verwendet werden kann.

14. Verfahren nach einem der Ansprüche 9 bis 13,
**dadurch gekennzeichnet,**
**dass** im Greifergehäuse und / oder dem ersten Saugelementträger (5) bzw. dem Zweiten Saugelementträger (6) Sensoren vorgesehen sind, die die Funktion einer Waage ausüben.

15. Verfahren nach einem der Ansprüche 9 bis 14,
**dadurch gekennzeichnet,**
**dass** die Verladesituation durch ein Rechnersystem erfasst und zur datentechnischen Grundlage eines automatischen Erfassungsvorgangs und folgenden Umladevorgangs gemacht wird.

16. Computerprogramm mit einem Programmcode zur Durchführung der Verfahrensschritte nach einem der Ansprüche 9 bis 15, wenn das Programm in einem Computer ausgeführt wird.

17. Maschinenlesbaren Träger mit Programmcode eines Computerprogramms zur Durchführung des Verfahrens nach einem der Ansprüche 9 bis 15 ,wenn das Programm in einem Computer ausgeführt wird.

## Claims

1. Apparatus for automatically removing pieces of luggage which differ in terms of their surface composition and their specific dimensions and for preparing for onward transportation with a gripper which is articulated to a robot arm and has suction elements, and with a first suction element carrier (5) with at least one vertical suction element (4), wherein said suction element carrier (5) has an additional push rod in the vertical direction, **characterized by** the following features:
a) the gripper has a second suction element carrier (6) with at least one horizontal suction element (3),
b) the suction elements (3, 4) can be activated individually and actively provide information to a control center by way of the respective suction process,
c) both the second suction element carrier (6) and the first suction element carrier (5) have in adjacent regions differently configured suction elements,
d) at least one suction element (3, 4) has at least one activatable adjusting element (18) for setting a spring bias, this setting being detected in real time,
e) the loading situation being visualized in 3D and real time by an image recognition system.

2. Apparatus according to Claim 1, **characterized in that** the second suction element carrier (6) and/or the first suction element carrier (5) each carry arrays of suction elements.

3. Apparatus according to one of the preceding claims, **characterized in that** at least one suction element (3, 4) has at least one flow meter (16) for measuring the suction air flow and/or a measuring means for measuring the pressure of the suction air.

4. Apparatus according to one of the preceding claims, **characterized in that** at least one suction element (3, 4) has at least one activatable adjusting element (18) for setting the spring bias, wherein this setting can be detected in real time.

5. Apparatus according to one of the preceding claims, **characterized in that** at least one suction element (3, 4) has at least one suction extraction channel (19), the cross section of which can be set in a variable manner, wherein this setting can be detected in real time.

6. Apparatus according to one of the preceding claims, **characterized in that** at least one suction element (3, 4) has at least one distance meter (17), wherein the measurement result can be detected in real time.

7. Apparatus according to one of the preceding claims, **characterized in that** the vertical suction elements (4) are shaped differently from the horizontal suction elements (3).

8. Apparatus according to one of the preceding claims, **characterized in that** tilting elements are located at the base point of the respective suction element carriers and/or at the base point of individual suction elements (3, 4).

9. Method for automatically removing pieces of luggage which differ in terms of their surface composition and their specific dimensions and for preparing for onward transportation by means of a gripper which is articulated to a robot arm and has suction elements, using the apparatus according to Claim 1, **characterized in that**,
a) the gripper and the container to be emptied are moved close to each other,
b) the first piece of luggage which is to be removed and is determined based on specific criteria, for example in the case of horizontal unloading, is gripped by the second suction element carrier (6) in combination with the horizontal suction elements (3) and withdrawn as far as possible,
c) if the vertical suction elements (4) are not yet able to sufficiently grip the partially accessible piece of luggage, the electronic controller recognizes the need to transfer the first suction element carrier (5) and the vertical suction elements (4) are released,
d) the first suction element carrier (5) is moved sideways and/or forward or backward and the vertical suction elements (4) become active again,
e) in difficult cases, this process is repeated.

10. Method according to Claim 9, **characterized in that** the suction elements (3, 4) have means for measuring the air throughput (16) and transmitting the measured values and also means for setting and providing feedback on the spring bias (18).

11. Method according to one of Claims 9 or 10, **characterized in that** the contact pressure of the suction cup in question is detected as a parameter by way of preliminary tests with the most frequent surface materials.

12. Method according to one of Claims 9 to 11, **characterized in that** it is determined how low the front faces of the individual pieces of luggage are mounted in the container during the assessment of position at the beginning of a detection process via a type of terrain model with detection of vertical positions and corresponding sensors.

13. Method according to one of Claims 9 to 12, **characterized in that** it can be used for unloading and/or loading stationary or movable containers, or moving containers.

14. Method according to one of Claims 9 to 13, **characterized in that** sensors, which perform the function of scales, are provided in the gripper housing and/or the first suction element carrier (5) or the second suction element carrier (6).

15. Method according to one of Claims 9 to 14, **characterized in that** the loading situation is detected by a computer system and is made the data-related basis of an automatic detection process and following transferring process.

16. Computer program with a program code for carrying out the method steps according to one of Claims 9 to 15 when the program is run in a computer.

17. Machine-readable carrier with a program code of a computer program for carrying out the method according to one of Claims 9 to 15 when the program is run in a computer.

## Revendications

1. Dispositif pour l'enlèvement automatique de bagages différents en termes de leurs caractéristiques de surface et de leurs dimensions spéciales, et pour leur transport ultérieur avec un dispositif de préhension articulé à un bras de robot avec des éléments aspirants, et avec un premier support d'éléments aspirants (5) avec au moins un élément aspirant vertical (4), ce support d'éléments aspirants (5) présentant une tringle de poussée supplémentaire dans la direction verticale,
**caractérisé par** les caractéristiques suivantes :
a) le dispositif de préhension présente un deuxième support d'éléments aspirants (6) avec au moins un élément aspirant horizontal (3),
b) les éléments aspirants (3, 4) peuvent être commandés individuellement et fournissent activement, par le biais de l'opération d'aspiration proprement dite, des informations à un centre de commande,
c) tant le deuxième support d'éléments aspirants (6) que le premier support d'éléments aspirants (5) présentent, dans des régions adjacentes, des éléments aspirants de configurations différentes,
d) au moins un élément aspirant (3, 4) présente au moins un actionneur commandable (18) pour l'ajustement d'une précontrainte de ressort, cet ajustement étant détecté en temps réel,
e) la situation de chargement étant visualisée en 3D et en temps réel par un système de reconnaissance d'image.

2. Dispositif selon la revendication 1,
**caractérisé en ce que**
le deuxième support d'éléments aspirants (6) et/ou le premier support d'éléments aspirants (5) portent à chaque fois des groupes d'éléments aspirants.

3. Dispositif selon l'une quelconque des revendications précédentes,
**caractérisé en ce**
**qu'**au moins un élément aspirant (3, 4) présente au moins un débitmètre (16) pour mesurer le flux d'air d'aspiration et/ou un moyen de mesure pour mesurer la pression de l'air d'aspiration.

4. Dispositif selon l'une quelconque des revendications précédentes,
**caractérisé en ce**
**qu'**au moins un élément aspirant (3, 4) présente au moins un actionneur commandable (18) pour l'ajustement de la précontrainte de ressort, cet ajustement pouvant être détecté en temps réel.

5. Dispositif selon l'une quelconque des revendications précédentes,
**caractérisé en ce**
**qu'**au moins un élément aspirant (3, 4) présente au moins un canal d'aspiration (19), dont la section transversale peut être ajustée de manière variable, cet ajustement pouvant être détecté en temps réel.

6. Dispositif selon l'une quelconque des revendications précédentes,
**caractérisé en ce**
**qu'**au moins un élément aspirant (3, 4) présente au moins un dispositif de mesure de distance (17), le résultat de la mesure pouvant être détecté en temps réel.

7. Dispositif selon l'une quelconque des revendications précédentes,
**caractérisé en ce que**
les éléments aspirants verticaux (4) présentent une autre forme que les éléments aspirants horizontaux (3).

8. Dispositif selon l'une quelconque des revendications précédentes,
**caractérisé en ce que**
des éléments de basculement sont situés à la base du support d'éléments aspirants respectif et/ou à la base d'éléments aspirants individuels (3, 4).

9. Procédé pour l'enlèvement automatique de bagages différents en termes de leurs caractéristiques de surface et de leurs dimensions spéciales, et pour leur transport ultérieur au moyen d'un dispositif de préhension articulé à un bras de robot avec des éléments aspirants, le procédé utilisant le dispositif selon la revendication 1,
**caractérisé en ce que**
a) le dispositif de préhension et le conteneur à vider sont rapprochés l'un de l'autre,
b) le premier bagage à enlever, déterminé sur la base de certains critères, par exemple dans le cas d'un déchargement horizontal, est saisi par le deuxième support d'éléments aspirants (6) en association avec les éléments aspirants horizontaux (3) et est ressorti dans la mesure du possible,
c) si les éléments aspirants verticaux (4) n'ont pas encore une prise suffisante sur le bagage partiellement accessible, la nécessité d'un déplacement du premier support d'éléments aspirants (5) est reconnue par la commande électronique, et les éléments aspirants verticaux (4) sont déclenchés,
d) le premier support d'éléments aspirants (5) est décalé latéralement et/ou vers l'avant ou vers l'arrière et les éléments aspirants verticaux (4) entrent à nouveau en action,
e) dans des cas complexes, cette opération est répétée.

10. Procédé selon la revendication 9,
**caractérisé en ce que**
les éléments aspirants (3, 4) présentent des moyens pour mesurer le débit d'air (16) et pour communiquer les valeurs de mesure, ainsi que des moyens pour ajuster et communiquer en retour la précontrainte de ressort (18).

11. Procédé selon l'une quelconque des revendications 9 ou 10,
**caractérisé en ce que**
la pression d'application de la ventouse concernée est détectée en tant que paramètre par le biais d'essais préalables avec les matériaux de surface les plus courants.

12. Procédé selon l'une quelconque des revendications 9 à 11,
**caractérisé en ce que**
lors de l'évaluation de la position au début d'une opération de saisie, on détermine par le biais d'un type de modèle de terrain avec détection des positions en hauteur et avec des capteurs correspondants, à quelle profondeur se trouvent les surfaces avant des bagages individuels dans le conteneur.

13. Procédé selon l'une quelconque des revendications 9 à 12,
**caractérisé en ce**
**qu'**il peut être utilisé pour décharger et/ou charger des conteneurs stationnaires ou déplaçables, ou des conteneurs en mouvement.

14. Procédé selon l'une quelconque des revendications 9 à 13,
**caractérisé en ce que**
dans le boîtier du dispositif de préhension et/ou dans le premier support d'éléments aspirants (5) ou le deuxième support d'éléments aspirants (6) sont prévus des capteurs qui exercent la fonction d'une balance.

15. Procédé selon l'une quelconque des revendications 9 à 14,
**caractérisé en ce que**
la situation de chargement est détectée par un système d'ordinateur et est prise pour base technique de données d'une opération de détection automatique et d'une opération de transbordement subséquente.

16. Programme informatique avec un code programme pour mettre en oeuvre les étapes de procédé selon l'une quelconque des revendications 9 à 15, lorsque le programme est exécuté dans un ordinateur.

17. Support lisible en machine avec un code programme d'un programme informatique pour mettre en oeuvre le procédé selon l'une quelconque des revendications 9 à 15, lorsque le programme est exécuté dans un ordinateur.
